(19)

Europäisches
Patentamt
European
Patent Office
Office européen
des brevets

(11) **EP 2 937 243 B1**

(12) **EUROPEAN PATENT SPECIFICATION**

(45) Date of publication and mention
of the grant of the patent:
**18.03.2020 Bulletin 2020/12**

(51) Int Cl.:
***B60L 53/00*** *(2019.01)*     ***H02J 3/14*** *(2006.01)*
***H02J 7/00*** *(2006.01)*     ***H02J 3/38*** *(2006.01)*

(21) Application number: **12826619.4**

(22) Date of filing: **20.12.2012**

(86) International application number:
**PCT/ES2012/070890**

(87) International publication number:
**WO 2014/096468 (26.06.2014 Gazette 2014/26)**

(54) **METHOD FOR POWER MANAGEMENT IN ELECTRICAL INSTALLATIONS**

MÉTODO PARA LA GESTIÓN DE POTENCIA EN INSTALACIONES ELÉCTRICAS

PROCÉDÉ DE GESTION DE PUISSANCE DANS DES INSTALLATIONS ELECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2015 Bulletin 2015/44**

(73) Proprietor: **Ingeteam Power Technology, S.A.
48170 Zamudio (Bizkaia) (ES)**

(72) Inventors:
 • **NICOLÁS HARO, Lesmes
E-31621 Sarriguren (Navarra) (ES)**

 • **GONZÁLEZ SENOSIÁIN, Roberto
E-31621 Sarriguren (Navarra) (ES)**
 • **COLOMA CALAHORRA, Javier
E-31621 Sarriguren (Navarra) (ES)**

(74) Representative: **Carpintero Lopez, Francisco et al
Herrero & Asociados, S.L.
Cedaceros 1
28014 Madrid (ES)**

(56) References cited:
**WO-A1-2011/157974     WO-A2-2008/125696
WO-A2-2011/024067     US-A1- 2004 201 282
US-A1- 2011 133 688     US-A1- 2012 139 472**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 937 243 B1

## Description

## Object of the Invention

The present invention is comprised in the field for managing the power generated and consumed in electrical installations. More specifically, the present invention relates to a method for managing the power generated and consumed by loads in electrical installations, whereby optimizing the use of the available power by assuring that the contract demand is not exceeded.

## Background of the Invention

Two types of sources are distinguished in electrical installations in the power generation part:

- Non-controllable sources: those power supply sources that can supply or generate a specific power which cannot be regulated and/or on which connection or disconnection actions cannot be performed are considered non-controllable sources.
- Controllable sources: those power supply sources that can supply or generate a specific power which can be regulated and/or supply sources on which connection or disconnection actions can be performed are considered controllable sources.

There are also primarily two types of loads that can be part of electrical installations:

- Non-controllable loads: those loads that consume a specific power which cannot be regulated and/or on which connection or disconnection actions cannot be performed are considered non-controllable loads
- Controllable loads: those loads that consume a specific power which can be regulated and/or loads on which connection or disconnection actions can be performed are considered controllable loads.

Two types of electric vehicles are considered to be within the controllable loads:

- Plug-in Hybrid Electric Vehicles (PHEV): these vehicles consist of a battery powered electric motor and an internal combustion engine giving the vehicle of a greater autonomous operating range.
- Battery Electric Vehicle (BEV): these vehicles consist of a battery powered electric motor.

The batteries of such vehicles can be charged by means of domestic type electrical outlets or dedicated connection points such as those referred to as charging "stations" or EVPS (Electric Vehicle Power System). These stations consist of power outlets which allow transferring electricity from the power grid to the vehicles.

The electrical installations in general and the EVPS type electrical installations in particular can be established in locations ranging from a residence to a service station or a shopping mall and requires being able to:

- determine the connection/disconnection or regulation of loads, such as the lighting, heating/cooling systems, electrical appliances, access doors, electric vehicles, etc.
- determine the connection/disconnection or regulation of sources such as photovoltaic inverters, wind-powered generators, etc.

The different charging modes and connection types for charging electric vehicles (EV) are defined in European standard UNE/EN61851 "Electric vehicle conductive charging system", according to which four different charging modes can be distinguished.

For charging modes 2 and 3, the regulation in force defines a control pilot the functionality of which is to establish a maximum available current limit of the grid for each charging point. Furthermore, it is expected that different technological solutions can be defined for establishing additional communication paths between the EV and charging station which allow informing the vehicle, for example, of the mentioned available current limit.

For modes 1, 2, 3 and 4 and all those derived from revising the regulation, it is necessary to manage the charging of electric vehicles assuring the electricity supply to said vehicles, and assuring that the contract demand for which the sections of the conductors and protections of each installation are sized is not exceeded.

One of the biggest problems with the emergence of electric vehicles is the capacity of the power distribution systems to meet the energy demand required for charging said vehicles.

As a consequence, it is necessary to establish mechanisms for controlling and managing grid resources, such that plugging in electric vehicles does not involve resizing the power grid or increasing the contract demand.

There are several possible solutions for this problem in the literature. For example, document US2010/0134067A1 describes a system for electrical circuit sharing for electric vehicle charging stations communicated with a controller implementing a process for dynamically assigning electric current to the stations which prevents exceeding the capacity of the electrical circuit. It relates to installations dedicated to charging electric vehicles, comprising only charging stations and devices for the communication/management thereof. One other example is WO2011157974.

Document US2011/0133693A1 describes a connection method as well as the devices necessary for the installation of a single charging station in an already existing line by implementing a current assignment process which takes into account the consumptions of elements outside the station (garage door, lights...). It prevents exceeding the contract demand and the subsequent tripping of protections which would involve not only interrupting the charging but would also involve shutting off the other connected elements.

The technical target problem that is considered is to assure an efficient and safe management of the sources and loads present in an electrical installation, including the EVPS type electrical installation, for example.

## Description of the Invention

The present invention seeks to solve the aforementioned problem by providing an optimum power distribution for all the loads connected in the electrical installation, assuring the correct use and operation of the entire installation.

The present invention is applicable for any type of electrical installation, particularly for charging stations (EVPS) installed in residences, service stations, shopping malls, etc., in which the electrical installation comprises at least:

- a central control unit (CCU) having at least one intensity and/or power measurement device measuring the intensity and/or power consumed by the installation, and at least one communications device allowing communication with the different devices of the installation.
- a controllable load or source.

In terms of location, the CCU can be located in the head-end of the installation or integrated in at least one of the controllable loads or sources which acts as a master. Furthermore, the CCU can be centralized in a single device or integrated in several devices of the installation (for example, the CCU is distributed in several charging stations).

Primarily two types of installations in which the invention can be applied are distinguished.

- Dedicated installations in which all the electric consumption of the circuit falls on the electricity transferred to the controllable loads.
- Non-dedicated installations in which, in addition to controllable loads, there are other devices that consume electricity such as lighting equipment, garage access doors, etc. A non-dedicated installation can be for example a residence in which there are non-controllable loads, such as the garage access door, and controllable loads such as a washing machine from which the connection can be controlled, or the heating the level of which can be regulated by means of the CCU.

One of the controllable loads considered which merits special mention is the electric vehicle that is connected to the system through the charging stations or EVPS.

The method for management described allows optimizing the use of the available power by assuring that the contract demand is not exceeded, being based on the fact that:

- not only are the consumptions of the loads and power generated by the sources controllable by the method taken into account, the consumptions of other loads and sources present in the electrical installation are also taken into account,
- the assignment and dynamic setting of the maximum available current reference for the controllable loads and sources allows optimally managing the available power and distributing it efficiently among the loads based on their actual and instantaneous consumption
- the maximum power reference of the installation is a dynamic variable which allows being adapted to the demand curves and handling power grid saturation situations efficiently.

## Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

Figure 1 shows a block diagram of a dedicated installation without a central control unit in the head-end of an electrical installation.

Figure 2 shows a block diagram of a dedicated installation with a central control unit.

Figure 3 shows a block diagram of a non-dedicated installation without a central control unit in the head-end of the electrical installation.

Figure 4a shows a generic block diagram of a non-dedicated installation with a central control unit in the head-end of the electrical installation.

Figure 4b shows a particular block diagram of a non-dedicated installation with a central control unit in the head-end of the electrical installation.

Figure 5 shows a flow chart with the main steps of a method for managing the power of an electrical installation according to a possible embodiment of the invention.

Figure 6 shows a flow chart of the method for managing the power of the electrical installation according to a possible embodiment of the invention with a resetting to prevent exceeding the maximum line connection power.

Figure 7 shows a flow chart of the method for managing the power of an electrical installation according to a possible embodiment of the invention with a real time consumption resetting.

Figure 8 shows a flow chart of the method for managing the power of an electrical installation according to a possible embodiment of the invention with a request to connect new controllable loads in the installation.

Figure 9 shows a flow chart of the method for managing the power of an electrical installation according to a possible embodiment of the invention with a request to connect a new controllable load.

## Preferred Embodiment of the Invention

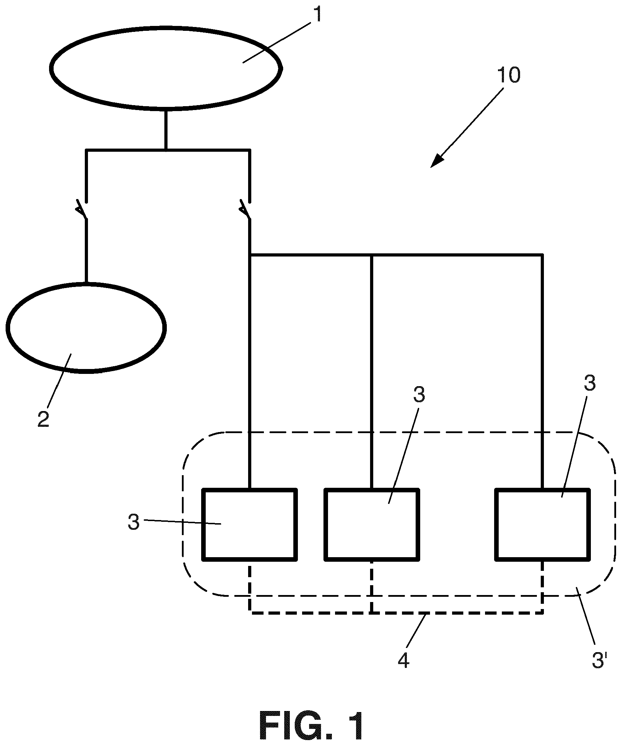

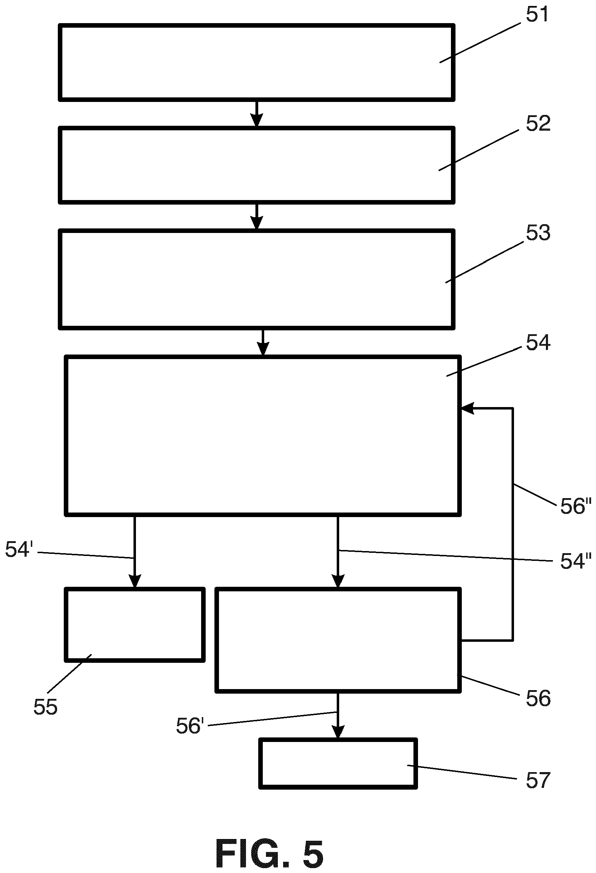

The invention is described below in reference to the different drawings depicting, in the case of Figures 1-4, several examples of request scenarios of the present invention and illustrating by flow charts in Figures 5-8, the different operations which the proposed method performs for managing the consumed energy. In any case, the drawings and examples do not intend to limit the invention to specific embodiments.

As illustrated in Figure 1, an electrical installation (10) can consist solely of several controllable loads connected to charging stations (3) provided with a communications device (4) so that the stations (3) can be communicated with one another. One or several of said stations (3) have all the information relating to the electrical installation (10) for the self-management of the power available in an electric line (1). In this case, since it is a dedicated electrical installation (10), only the connection/disconnection and the energy consumed by the controllable loads (3'), such as electric vehicles, connected to the stations (3) are regulated, considering a continuous line connection regardless of other consumption devices (2) which in this scenario are outside the installation, for example, consumptions in a residence.

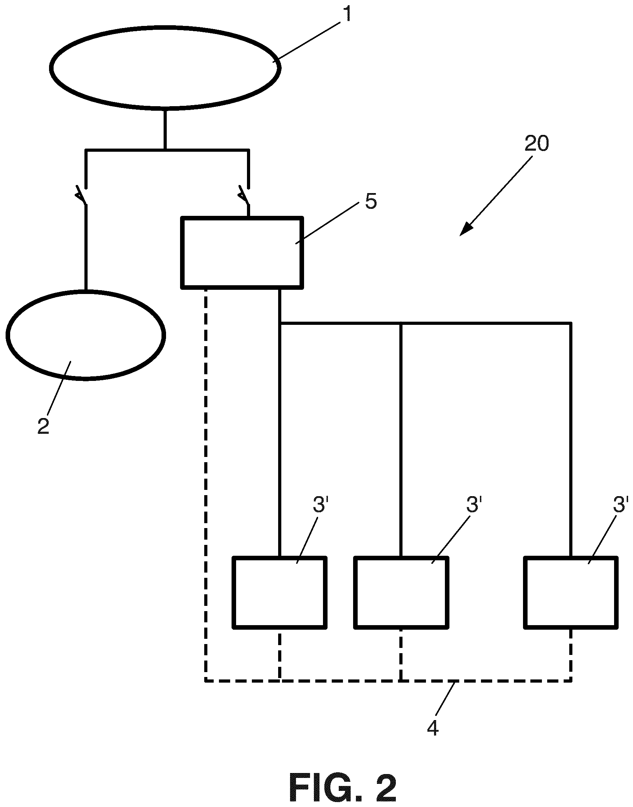

Figure 2 depicts another dedicated electrical installation (20) in which only the controllable loads (3') are therefore managed. This electrical installation (20) comprises a CCU or central control unit (5) in the head-end of the electrical installation (20). In this configuration, the central control unit (5) is responsible for managing the available power, for which purpose it has all the information relating to the electrical installation (20), that information containing, for example, the number of loads, the nominal power of each load and/or the instantaneous consumption of each load, among others. The remaining consumption devices (2) are still considered outside the power management process of the charging stations.

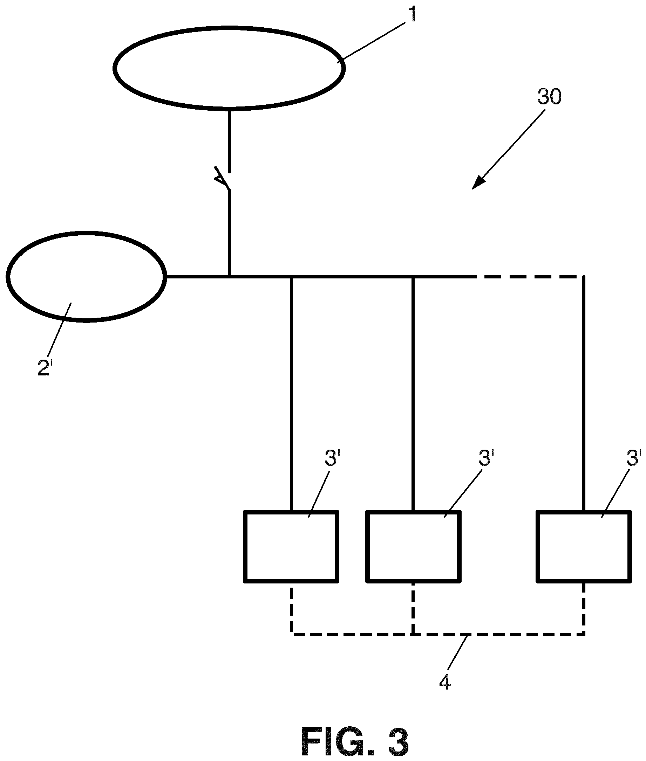

Figure 3 depicts a preferred embodiment in a non-dedicated electrical installation (30) which does not comprise a CCU in the head-end of the installation and therefore one or several controllable loads (3') are responsible for the self-management of the consumed energy. Since it is a non-dedicated electrical installation (30), it comprises other loads forming non-controllable loads (2'), these being able to be the consumption devices (2) of a residence, shopping mall and/or service station, among others. In these situations, the maximum power capacity parameter is configured such that if said margin is not exceeded, the electrical installation (30) has enough capacity for supplying power to the non-controllable loads.

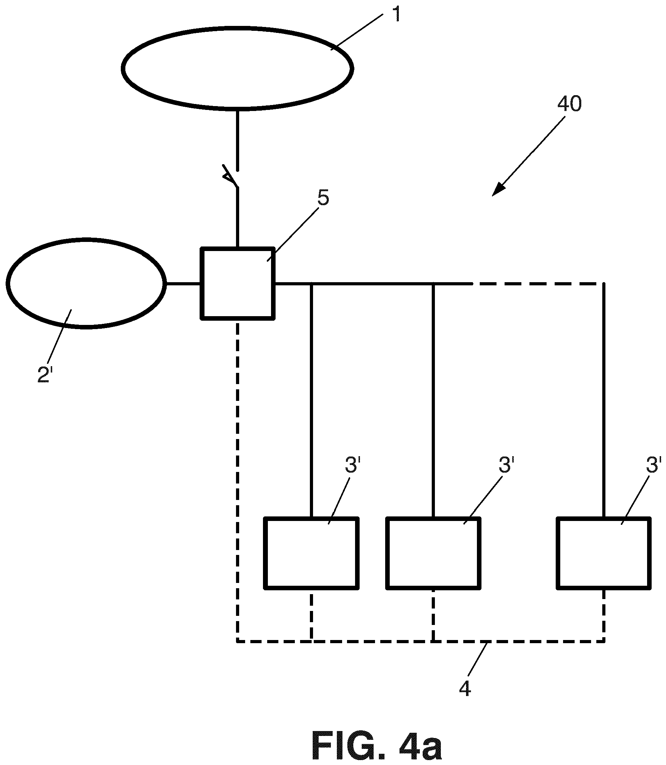

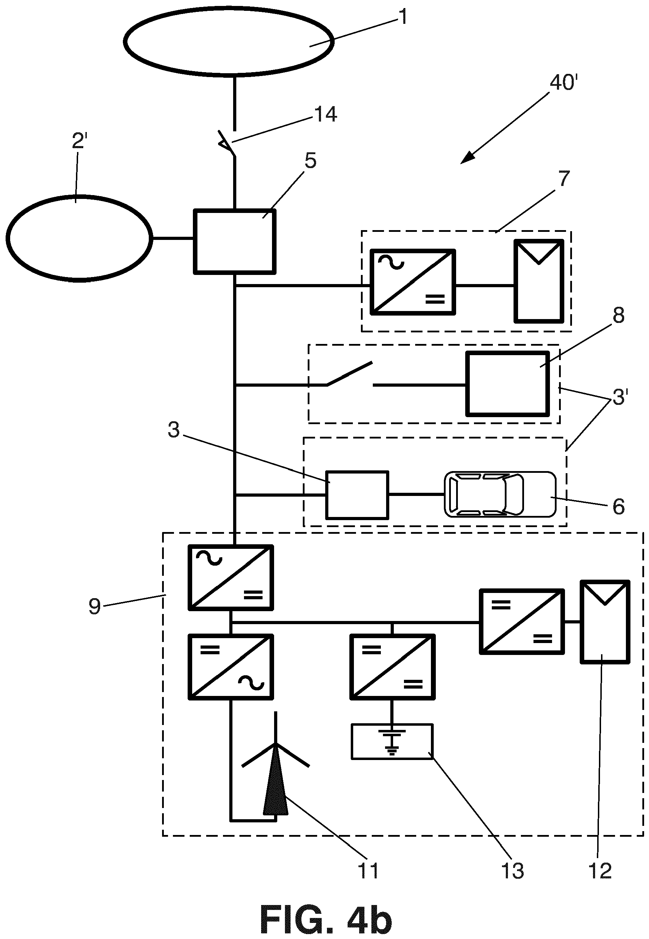

Finally, several more complex installation examples are depicted in Figures 4a and 4b.

Figure 4a depicts a generic non-dedicated electrical installation (40) with a central control unit (5) in the head-end. The central control unit (5) manages the consumption of all the connected controllable loads (3'), dynamically having to that end the information relating to the number of controllable loads (3'), the nominal power of each load, the status of each load, the instantaneous consumptions of each load, the installation capacity and the instantaneous consumption of the non-controllable loads (2'). This allows the proposed method for managing power to be dynamically adapted to the conditions of the electrical installation (40).

A more particular case of a non-dedicated installation such as that of Figure 4a is depicted in Figure 4b, where the electrical installation (40') is formed by:

-    the grid line connection (14) through which the electrical installation (40') is connected to the electric line (1) the available power of which must be managed by means of a CCU (5) implementing the proposed method,
- a smart energy meter which houses the central control unit (5),
- controllable loads (3') comprising, for example, an electric water heater (8) and a charging station (3) for electric vehicles (6),

- a controllable source (7) comprising a photovoltaic panel and inverter,
- a controllable source represented by a hybrid system (9) with renewable energy inputs (11), for example photovoltaic energy input (12) and wind energy input (11), and intermediate storage capacity in a battery (13),
- other consumptions of non-controllable loads (2').

For the management and request of the method in the installation (40') depicted in Figure 4b, the central control unit (5) dynamically has the information relating to the number of controllable loads (3') and the number of controllable sources (7, 9), the nominal power of each of said loads and sources, the status of each of them, the instantaneous consumptions of each of them, the installation capacity and the instantaneous consumption of the non-controllable loads (2'). With this information, in addition to controlling the connection/disconnection and/or regulation of the controllable loads (3'), the central control unit (5) regulates the connection/disconnection and generation of the controllable sources (7, 9). The maximum available power will depend, in each instant, on the status of the grid or electric line (1) and on the generation capacity of the controllable sources (7, 9). Depending on the instantaneous consumptions of the loads (2', 3'), priority is given to the consumed energy coming from renewable energy sources (11, 12), regulating the power generated by these sources with respect to the necessary consumption of the present loads (2', 3'). In the event of the loss of supply, the intelligent meter informs of this situation and the central control unit (5) commands the hybrid system (9) to generate the necessary energy and thus prevent interrupting the consumption of the loads. The hybrid system (9) in turn gives priority to its generated power coming from renewable energy sources (11,12) and regulates the power generated by them with respect to the instantaneous consumption of the loads (2', 3'), it further being possible to have a supporting generator such as the combustion group for exceptional situations in which the consumed power could not be supplied by other sources. The hybrid system (9) depicted in Figure 4b is further provided with an intermediate storage battery (13); this battery is charged while the consumptions are less than the available power of the power grid (1) and the controllable sources (7,11,12), and it is used as an additional power supply in the instant in which the available power is less than the consumptions of the loads; the battery (13) becoming one that can supply part of the available power of the installation (40').

In any of the installations (10, 20, 30, 40, 40') of the preceding examples, in the event of loss of functionality of the central control unit (5), at least one of the controllable loads (3'), for example a charging station (3), can adopt the functions of a central control unit (5).

In reference to the flow charts of the method, Figure 5 depicts the main operations performed by the central control unit (5). First, the maximum power set-point or reference value (51) of the installation (10, 20, 30, 40, 40') is determined, establishing a safety margin based on that value, and the connection or disconnection of the controllable loads (3, 3') and the maximum initial current reference (53) for each connected load are determined (52) according to that set-point, without exceeding the maximum power depending on the number of controllable loads (3'). Once these references are established, to ensure that the maximum available power is not exceeded and to perform an efficient management, the instantaneous consumptions of the connected controllable loads (3') are continuously controlled (54). To that end, the total power consumption is compared with the safety margin established with respect to the maximum power set-point, which is a variable that can be configured by the installation administrator, who can set the value thereof in real time to adapt the consumption of the installation in the event of power grid saturation.

Therefore, according to Figure 5, a preferred embodiment of the present invention relates to a method for managing power consumed in electrical installations (10, 20, 30, 40, 40'), which comprises determining (52) whether at least one controllable load (3') or controllable source (7, 9) of the electrical installation (10, 20, 30, 40, 40') is connected to or disconnected from an electric line (1) of the electrical installation (10, 20, 30, 40, 40'), characterized in that it further comprises:

- determining a maximum power reference value (51) for the electrical installation and establishing a safety margin of the electrical installation (10, 20, 30, 40, 40') for said maximum power reference value,
- determining a maximum initial current reference (53) for each of the controllable loads or sources (3') based on the maximum power reference value and on a number of controllable or non-controllable loads or sources connected in the electrical installation (10, 20, 30, 40, 40'),
- measuring an instantaneous consumption value and setting (57) a maximum available current reference (54) for each connected controllable load (3'), and likewise, if there are connected controllable sources (7, 9), measuring a generated power value and setting or recalculating the maximum available current reference for the controllable sources for each connected controllable source (7, 9),

- calculating a total consumption value for the electrical installation using the maximum available current reference (54) assigned for each connected controllable load (3') or connected controllable source (7, 9) and comparing it with the maximum power reference value (51),
- determining whether at least one controllable load (3') or controllable source (7, 9) of the electrical installation is connected to or disconnected from the electric line and determining a new maximum power reference value for the electrical installation.

The step of determining (52) whether at least one controllable load (3') of the electrical installation (10, 20, 30, 40, 40') is connected to or disconnected from the electric line (1) can be performed taking into account some of the following factors or a combination thereof:

- an accounted time of use for said controllable load (3');
- a priority level assigned to said controllable load (3'), which priority can be assigned based on a user identification system;
- a magnetothermal protection trip curve for the electrical installation, to which the response times in the connection/disconnection of the loads are adapted based on the measurement taken by means of a temperature sensor.

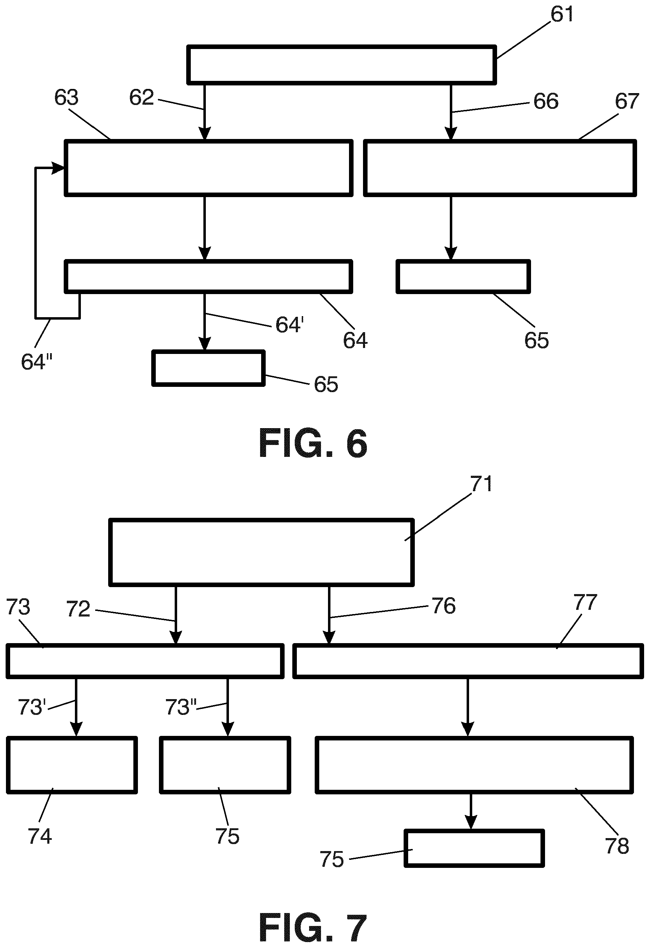

If the total power consumption is close (54') to the maximum power set-point, a resetting (55) performed according to the steps depicted in Figure 6 is necessary to not exceed the power of the grid connection line.

If the total power consumption does not exceed (54") the maximum power set-point and the consumption of a controllable load (3') is less than that assigned, the total consumption is also reset following the steps illustrated in Figure 7 for an efficient management of the available power. However, if the consumption of the controllable loads (3') approaches -equaling or exceeding- the assigned consumption, the step of updating (54) the instantaneous consumptions of the controllable loads (3') is performed again.

If it is detected in the verification (56) of the consumption that the consumption of a controllable load is less than the assigned consumption (56") for a minimum established time, the power management process continues (57) proceeding according to Figure 7.

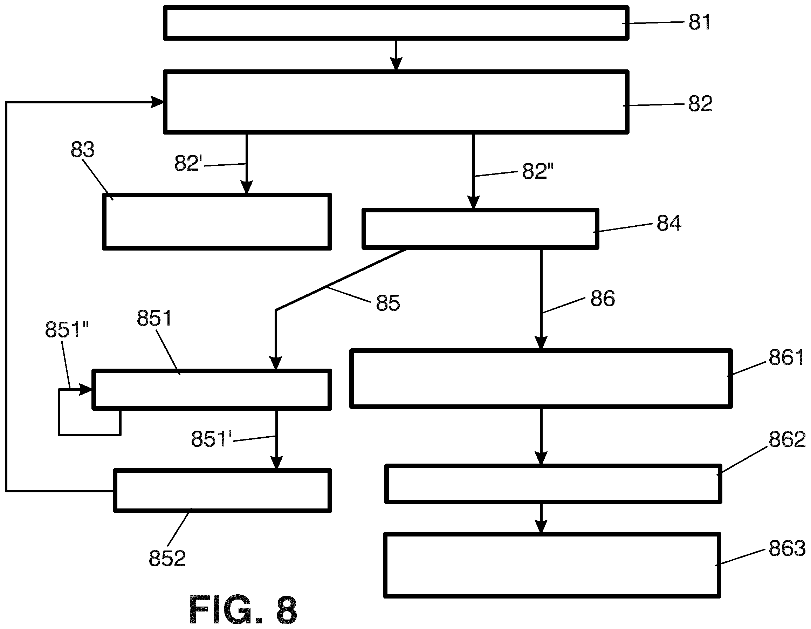

If the request is received or the connection of a new controllable load (3') is required, the resetting process is the one shown in Figure 8.

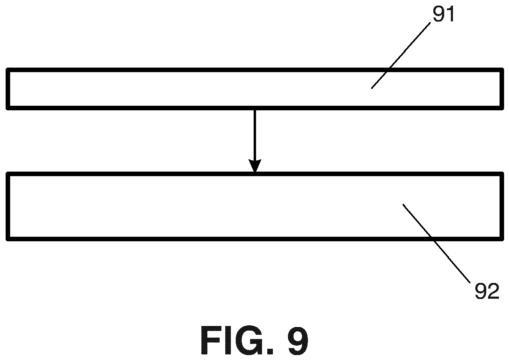

Figure 9 shows the reception of a new request to connect a new controllable load (91) which involves recalculating the available power at that time (92).

The different resetting processes of Figure 5-8 defining two types of control are detailed below:

Management by "Time of Use"

Management by "time of use" is based on using each controllable load (3') "in shifts" when it approaches or when it is expected to exceed the total line connection power limit with a safety margin of the electrical installation. The installation (20, 40, 40') consists of a central control unit (5) and different connection points for controllable loads (3') distributed and intercommunicated with one another.

The central control unit (5) instantaneously controls the load parameters, total consumption and individual consumption in the installation.

The central control unit (5) knows at all times the power available in the line connection, which is equal to the total line connection power minus the total consumption of the loads: (line connection power - consumption).

Therefore, as shown in Figure 8, when a request to connect (81) a controllable load (3') or a charging station (3) is received, the power available at that time is recalculated and whether the available power is greater (82') than the nominal power of the load which has made the request, the central control unit (5) commands and authorizes the controllable load (3') to proceed to connect at the nominal current. This situation occurs for the subsequent requests to connect other stations or controllable loads (3, 3') as long as the following condition is complied with:

Condition 1: (line connection power – consumption) > load nominal power

If condition 1 is not complied with and if a control by time of use (85) is performed, whether a controllable load (3') has a time of use (851) which exceeds a maximum time (851'), or whether a controllable load is expected to go beyond said time maximum (851") is checked, and in such case, the connection (852) of the load with that time of use is interrupted and the power available at that time (82) is again calculated.

Once the connection to a load is authorized, said controllable load (3') measures a series of parameters comprising the intensity and/or power being consumed at all times. The charging station or controlled load (3, 3') informs the central control unit (5) of these parameters. Therefore, the decision parameters established for managing charging are always based on real time consumptions of the installation and not on "current assignments" or "nominal power of each load" which would not optimize the use of the installation capacity.

Therefore, if a vehicle or vehicles or controllable loads are consuming a current less than the nominal current, that power margin is taken into account for computing the remaining available total power of the installation optimizing the capacity of the electric line (1), according to the resetting process shown in Figure 7. The available current (71) is then recalculated and, taking into account that the central control unit (5) is configured to perform a management by time of use (72), "condition 1" is checked and if it is complied with, the central control unit (5) authorizes a new connection (74) of controllable loads (3'); if it is not complied with, the instantaneous consumptions of the connected loads (75) is calculated again, i.e., going back to step (54) of Figure 5.

Any consumption session has a connection point time of use counter, therefore, when the preceding "condition 1" is not complied with, i.e., more total power than that available is required, it can become a management of using the power grid in shifts according to Figure 6. By verifying the type of control (61) used by the central control unit (5), in the event that the control is by time of use (62), the controllable load (3') with the greater time of use (63) is disconnected and it is again verified (64) whether the total consumption exceeds the total line connection power after disconnecting the load: consumption > line connection power. If so (64"), loads remain disconnected according to the criterion of greater time of use and if not (64') the instantaneous consumptions of the connected loads (65) are calculated again, i.e., going back to step (54) of Figure 5.

The method allows parametrizing maximum times of use and allows prioritizing by levels. If the available power is less than the power of the last load which has made a request to connect, the load of that vehicle (6) or controllable load (3') with greater time of use is interrupted. Optionally, a criterion by priority assigned to the controllable loads (3') can also be followed and the disconnection of the load with greater time of use and lower priority level is performed. The connection priority levels for the loads can be established by different parameters such as: user level and/or preferred connection timetable according to the load type, among others. The latter disconnection action is repeated until "condition 1" is complied with. The vehicles or controllable loads (3') the load of which has been interrupted are connected again when other vehicles (6) or controllable loads (3') gradually reach the maximum time of use. For example, priority is given to vehicles (6) in line with less time of use for loads (3') with the same priority level.

The time of use counters are only refreshed at the end of the consumption session.

In the event of a sudden high increase in the total consumption of the circuit, either due to charging the vehicles or other devices present in the same circuit, the method for managing power assures the disconnection of the charging stations (3) or controllable loads (3') necessary to prevent tripping the magnetothermal protection protecting the line connection of the circuit, thus preventing leaving the entire circuit without a power supply. To be able to prevent tripping the protection, one of the configurable parameters of the installation can be a type of protection trip curve for the installation. Likewise, in the event of a considerable increase in the temperature, the loads (3') can be disconnected to prevent tripping in the protections of the installation which affect other loads present.

Management by "available current"

Management by "available current" is based on communicating to each controllable load (3') the maximum available current in real time for each connection point.

The installation (20, 40, 40') consists of a central control unit (5) and different connection points distributed and intercommunicated with one another.

The central control unit (5) instantaneously controls the load parameters, total consumption and individual consumption in the installation and knows the power available in the line connection at all times: line connection power - consumption. Therefore, in the request to connect a new load according to the resetting process shown in Figure 8, if the available power is greater than the nominal power of said load which has made the request (82), the central control unit (5) will command it to proceed to connection. This situation will occur for subsequent requests to connect other loads as long as the following condition is complied with: Condition 1: (Connection line power - consumption) > load nominal power

In other words, if more total power than that available (82") is required, considering that the type of control is by available current (86), the central control unit (5) commands regulating the charging of all vehicles or loads to a maximum current before proceeding to the load of the last request, the maximum current in a load being that available in the line connection discounting the safety consumption margin distributed into the total number of load requests:

$$I_{load} = (I_{line\ connection} - \%\ consumption\_margin)\ /\ No.\ of\ load\ requests$$

The charging station (3) measures the intensity and/or power that is being transferred to the vehicle (6) or controllable load (3') at all times and informs the central control unit (5) which recalculates the maximum current reference of each load taking into account the new request (861) according to the preceding expression. Therefore, the decision parameters established for managing the charging are always based on the real time consumptions of the installation and not on the "current assignments", the Iload or the nominal power of each charging station or controllable load", which would not optimize the use of the installation capacity. The central control unit (5) authorizes the connection of the controllable load (3') and recalculates the available current (862) to then reassign said current (863) to the new connected controllable load (3').

If one of the vehicles (6) or controllable load/loads (3') is consuming a current less than Iload for a specific time, according to the control by current management described in Figure 7, the central control unit (5) commands reducing the current assigned (77) to that/those controllable load/loads (3') and it can reassign (78) said current difference to other vehicles or loads which are charging at the maximum current reference (78), recalculating the available current -I'load- for those which are charging at that maximum established current - No. EV Imax- according to the expression:

$$\text{I'load} = (\text{Iconnection line} - \%\text{consumption\_margin} - \text{Icons}) / \text{No. EV Imax}$$

Icons being the sum of the actual current consumed by all those vehicles or loads which are charging, with a specific margin, below the current reference Iload.

Optionally, different connection priority levels can be assigned for the loads, establishing the priorities through different parameters such as user level, preferred connection timetable according to the load type,... etc. This can mean that there may be loads the current assignment of which must always be the greatest possible due to having the highest priority level.

In the event of a sudden high increase in the total consumption of the circuit (55), the resetting shown in Figure 6 is performed, which for the case of control based on available current (66) involves, as described, recalculating the maximum reference of the maximum current of each of the loads (67) and updating its instantaneous consumptions (65) again. Regardless of whether that increase in total consumption is due to the charging of vehicles or other devices present in the same circuit, the method for managing power assures the reassignment of available current for each charging station in order to prevent tripping the magnetothermal protection protecting the line connection of the circuit, thus preventing leaving the entire circuit without a power supply. To be able to prevent tripping the protection, one of the configurable parameters of the installation can be a type of protection trip curve for the installation. Likewise, in the event of a considerable increase in the temperature, the loads are regulated to lower consumptions to preventing tripping in the protections of the installation which affect other loads present.

Both types of management are applied to any type of controllable loads (3') present in the installation, being able to be combined, for example, in a residence, being able to regulate the heating, the charging of an electric vehicle, to connect/disconnect specific loads - washing machine...- etc.

In the event of loss of functionality of the central control unit (5) and/or of the charging station (3) for electric vehicles forming controllable loads (3') of the electrical installation (10, 20, 30, 40, 40') where it is integrated, another one of charging stations (3) for electric vehicles which do not suffer the loss of functionality assumes the functions of a central control unit (5). And in the event that there is more than a charging station (3) for electric vehicles forming controllable loads (3') of the electrical installation (10, 20, 30, 40, 40'), these charging stations (3) can be self-identified by means of a discovery routine implemented in the control of each station.

It must be observed in this text that the terms "comprises" and its derivations (such as "comprising", etc.) must not be interpreted in an excluding manner, i.e., these terms must not be interpreted as excluding the possibility that what is described and defined may include additional elements, steps, etc.

## Claims

1. Method for managing power consumed in electrical installations (10, 20, 30, 40, 40') which comprises determining (52) whether at least one controllable load (3') and at least one controllable source (7, 9) of the electrical installation (10, 20, 30, 40, 40') is connected to or disconnected from the electrical installation (10, 20, 30, 40, 40'), defining a connected status and a disconnected status of the controllable load (3') and the controllable source (7, 9) when said controllable load (3') and controllable source (7, 9) are respectively connected to or disconnected from the electrical installation (10, 20, 30, 40, 40');
   wherein a number of loads, selected from controllable loads (3') and non-controllable loads (2'), is connected to the electrical installation (10, 20, 30, 40, 40'); and
   wherein a number of sources, selected from controllable sources (7, 9) and non-controllable sources, is connected to the electrical installation (10, 20, 30, 40, 40');

the method being **characterized in that** it further comprises:

- determining a maximum power reference value (51) for limiting total power exchanged between the electrical installation (10, 20, 30, 40, 40') and an electric line (1) establishing a safety margin of the maximum power reference value,
- determining a maximum initial current reference (53) for each of the controllable loads (3') and controllable sources (7, 9) based on:

- the maximum power reference value (51) and
- the number of loads and the number of sources connected to the electrical installation (10, 20, 30, 40, 40'),

- for each of the connected controllable loads (3'), measuring an instantaneous consumption value and setting (57), based on the measured instantaneous consumption of the controllable loads (3'), a maximum available current reference (54);

- if the maximum available current reference (54) set in the previous step is lower than the minimum value of the current required by a controllable load connected to the electrical installation (10, 20, 30, 40, 40') , disconnecting said controllable load from the electrical installation (10, 20, 30, 40, 40') and updating the number of loads connected to the electrical installation (10, 20, 30, 40, 40') accordingly;

- for each of the connected controllable sources (7, 9), measuring a generated power value and setting a maximum available current reference,
- calculating a total consumption value for the electrical installation (10, 20, 30, 40, 40') using:

- the maximum available current reference (54) for each connected controllable load from the updated number of loads connected to the electrical installation (10, 20, 30, 40, 40'), and
- the maximum available current reference for each connected controllable source from an updated number of sources connected to the electrical installation (10, 20, 30, 40, 40');

- determining an updated maximum power reference value whenever at least one of the controllable loads (3') or at least one of the controllable sources (7, 9) changes its connected or disconnected status.

2. Method according to claim 1, **characterized in that** it determines (52) whether at least one controllable load (3') of the electrical installation (10, 20, 30, 40, 40') is connected to or disconnected from the electric line (1) taking into account an accounted time of use for said controllable load (3').

3. Method according to any of the preceding claims, **characterized in that** it determines (52) whether at least one controllable load (3') of the electrical installation (10, 20, 30, 40, 40') is connected to or disconnected from the electric line (1) taking into account a priority level assigned to said controllable load (3').

4. Method according to any of the preceding claims, **characterized in that** it determines (52) whether at least one controllable load (3') of the electrical installation (10, 20, 30, 40, 40') is connected to or disconnected from the electric line (1) taking into account a magnetothermal protection trip curve for the electrical installation (10, 20, 30, 40, 40').

5. Method according to any of the preceding claims, **characterized in that** it determines (52) whether at least one controllable load (3') of the electrical installation (10, 20, 30, 40, 40') is connected to or disconnected from the electric line (1) using information received in real time relating to the electrical installation (10, 20, 30, 40, 40') from a control center external to the electrical installation (10, 20, 30, 40, 40').

6. Method according to any of the preceding claims, **characterized in that** said method is run in a central control unit (5) belonging to the electrical installation (10, 20, 30, 40, 40').

7. Method according to claim 5, **characterized in that** the central control unit (5) is in the head-end of the electrical installation (10, 20, 30, 40, 40').

8. Method according to claim 5, **characterized in that** the central control unit (5) is integrated in at least one controllable load (3').

9. Method according to claim 6, **characterized in that** the central control unit (5) is integrated in one or more charging stations (3) for electric vehicles (6) forming controllable loads (3') of the electrical installation (10, 20, 30, 40, 40').

10. Method according to claim 9, **characterized in that** in the event of loss of functionality of at least one of said charging stations (3) for electric vehicles (6) forming controllable loads (3') of the electrical installation (10, 20, 30, 40, 40'), at least one charging station (3) for electric vehicles (6) not experiencing a loss of functionality, the central control unit (5) is integrated in said at least one charging station (3) for electric vehicles (6) without a loss of functionality.

11. Method according to claim 1, **characterized in that** if the electrical installation (10, 20, 30, 40, 40') includes at least one renewable energy source (7,11,12), the maximum available current references (54), connections to and disconnections from the electric line (1) for each controllable load (3') are established taking into account the production of the renewable energy sources (7,11,12).

12. Method according to claim 4, **characterized in that** the connection or disconnection of the loads is performed with response times which are set to the magnetothermal protection trip curves and to measurements taken by means of a temperature sensor.

13. Software product comprising programming code means which, when loaded in a processor integrated in a device of an electrical installation (10, 20, 30, 40, 40'), make said programming code means run the method according to any of claims 1 to 12.


**Patentansprüche**

1. Verfahren zum Verwalten des Leistungsverbrauchs in Elektroinstallationen (10, 20, 30, 40, 40'), welches das Bestimmen (52), ob mindestens eine regelbare Last (3') und mindestens eine regelbare Quelle (7, 9) der Elektroinstallation (10, 20, 30, 40, 40') an die Elektroinstallation (10, 20, 30, 40, 40') angeschlossen oder von dieser getrennt ist, umfasst, wobei ein Angeschlossen-Status und ein Getrennt-Status für die regelbare Last (3') und die regelbare Quelle (7, 9) definiert werden, wenn die regelbare Last (3') und die regelbare Quelle (7, 9) an die Elektroinstallation (10, 20, 30, 40, 40') angeschlossen bzw. von dieser getrennt sind;
wobei eine Anzahl von Lasten, ausgewählt aus regelbaren Lasten (3') und nicht-regelbaren Lasten (2'), an die Elektroinstallation (10, 20, 30, 40, 40') angeschlossen ist; und
wobei eine Anzahl von Quellen, ausgewählt aus regelbaren Quellen (7, 9) und nicht-regelbaren Quellen, an die Elektroinstallation (10, 20, 30, 40, 40') angeschlossen ist;
wobei das Verfahren **dadurch gekennzeichnet ist, dass** es ferner Folgendes umfasst:

- das Bestimmen eines maximalen Leistungsreferenzwertes (51) zur Begrenzung der zwischen der Elektroinstallation (10, 20, 30, 40, 40') und einer elektrischen Leitung (1) ausgetauschten Gesamtleistung, wodurch eine Sicherheitsspanne für den maximalen Leistungsreferenzwert ermittelt wird,
- Bestimmen einer maximalen Anfangsstromreferenz (53) für jede der regelbaren Lasten (3') und regelbaren Quellen (7, 9), basierend auf:

  - dem maximalen Leistungsreferenzwert (51) und
  - der Anzahl von Lasten und der Anzahl von Quellen, die an die Elektroinstallation (10, 20, 30, 40, 40') angeschlossen sind,

- für jede der angeschlossenen regelbaren Lasten (3') Messen eines momentanen Verbrauchswertes und Einstellen (57), basierend auf dem gemessenen momentanen Verbrauch der regelbaren Lasten (3'), einer maximalen verfügbaren Stromreferenz (54);

  - wenn die im vorherigen Schritt eingestellte maximale verfügbare Stromreferenz (54) niedriger ist als der minimale Wert für den Strom, den eine an die Elektroinstallation (10, 20, 30, 40, 40') angeschlossene regelbare Last erfordert, Trennen der regelbaren Last von der Elektroinstallation (10, 20, 30, 40, 40') und entsprechend Aktualisieren der Anzahl an Lasten, die an die Elektroinstallation (10, 20, 30, 40, 40') angeschlossen sind;

- für jede der angeschlossenen regelbaren Quellen (7, 9) Messen eines Wertes der erzeugten Leistung und Einstellen einer maximalen verfügbaren Stromreferenz,

- Berechnen eines Gesamtverbrauchswertes für die Elektroinstallation (10, 20, 30, 40, 40') unter Verwendung:

- der maximalen verfügbaren Stromreferenz (54) für jede angeschlossene regelbare Last aus der aktualisierten Anzahl von Lasten, die an die Elektroinstallation (10, 20, 30, 40, 40') angeschlossen sind, und
- der maximalen verfügbaren Stromreferenz für jede angeschlossene regelbare Quelle aus einer aktualisierten Anzahl von Quellen, die an die Elektroinstallation (10, 20, 30, 40, 40') angeschlossen sind;

- Bestimmen eines aktualisierten maximalen Leistungsreferenzwertes, immer wenn mindestens eine der regelbaren Lasten (3') oder mindestens eine der regelbaren Quellen (7, 9) ihren Angeschlossen- oder Getrennt-Status ändert.

2. Verfahren nach Anspruch 1, **dadurch gekennzeichnet, dass** es unter Berücksichtigung einer in Betracht kommenden Nutzungszeit für die regelbare Last (3') bestimmt (52), ob mindestens eine regelbare Last (3') der Elektroinstallation (10, 20, 30, 40, 40') an die elektrische Leitung (1) angeschlossen oder von dieser getrennt ist.

3. Verfahren nach einem der vorstehenden Ansprüche, **dadurch gekennzeichnet, dass** es unter Berücksichtigung einer der regelbaren Last (3') zugeordneten Prioritätsstufe bestimmt (52), ob mindestens eine regelbare Last (3') der Elektroinstallation (10, 20, 30, 40, 40') an die elektrische Leitung (1) angeschlossen oder von dieser getrennt ist.

4. Verfahren nach einem der vorstehenden Ansprüche, **dadurch gekennzeichnet, dass** es unter Berücksichtigung einer Kurve zum Auslösen magnetothermischen Schutzes für die Elektroinstallation (10, 20, 30, 40, 40') bestimmt (52), ob mindestens eine regelbare Last (3') der Elektroinstallation (10, 20, 30, 40, 40') an die elektrische Leitung (1) angeschlossen oder von dieser getrennt ist.

5. Verfahren nach einem der vorstehenden Ansprüche, **dadurch gekennzeichnet, dass** es unter Anwendung von Informationen, die in Echtzeit über die Elektroinstallation (10, 20, 30, 40, 40') von einer außerhalb der Elektroinstallation (10, 20, 30, 40, 40') befindlichen Regelwarte erhalten werden, bestimmt (52), ob mindestens eine regelbare Last (3') der Elektroinstallation (10, 20, 30, 40, 40') an die elektrische Leitung (1) angeschlossen oder von dieser getrennt ist.

6. Verfahren nach einem der vorstehenden Ansprüche, **dadurch gekennzeichnet, dass** das Verfahren in einer zentralen Regeleinheit (5), die zu der Elektroinstallation (10, 20, 30, 40, 40') gehört, läuft.

7. Verfahren nach Anspruch 5, **dadurch gekennzeichnet, dass** sich die zentrale Regeleinheit (5) im Kopfteil der Elektroinstallation (10, 20, 30, 40, 40') befindet.

8. Verfahren nach Anspruch 5, **dadurch gekennzeichnet, dass** die zentrale Regeleinheit (5) in mindestens eine regelbare Last (3') integriert ist.

9. Verfahren nach Anspruch 6, **dadurch gekennzeichnet, dass** die zentrale Regeleinheit (5) in eine oder mehrere Ladestationen (3) für Elektrofahrzeuge (6), die regelbare Lasten (3') der Elektroinstallation (10, 20, 30, 40, 40') bilden, integriert ist.

10. Verfahren nach 9, **dadurch gekennzeichnet, dass** im Falle eines Funktionalitätsverlustes von mindestens einer der Ladestationen (3) für Elektrofahrzeuge (6), die regelbare Lasten (3') der Elektroinstallation (10, 20, 30, 40, 40') bilden, mindestens eine Ladestation (3) für Elektrofahrzeuge (6) keinen Funktionalitätsverlust erfährt, wobei die zentrale Regeleinheit (5) in die mindestens eine Ladestation (3) für Elektrofahrzeuge (6) ohne Funktionalitätsverlust integriert ist.

11. Verfahren nach Anspruch 1, **dadurch gekennzeichnet, dass**, wenn die Elektroinstallation (10, 20, 30, 40, 40') mindestens eine Quelle für erneuerbare Energie (7, 11, 12) umfasst, die maximalen verfügbaren Stromreferenzen (54), Anschlüsse an und Trennungen von der elektrischen Leitung (1) für jede regelbare Last (3') unter Berücksichtigung der Produktion der Quellen für erneuerbare Energie (7, 11, 12) ermittelt werden.

12. Verfahren nach Anspruch 4, **dadurch gekennzeichnet, dass** das Anschließen oder Trennen der Lasten mit Reaktionszeiten erfolgt, die an die Kurven zum Auslösen magnetothermischen Schutzes und von einem Temperaturfühler vorgenommenen Messungen angepasst sind.

13. Softwareprodukt, umfassend Programmierungscodemittel, das, geladen in einen in eine Vorrichtung einer Elektroinstallation (10, 20, 30, 40, 40') integrierten Prozessor, veranlasst, dass die Programmierungscodemittel das Verfahren nach einem der Ansprüche 1 bis 12 laufen lassen.

**Revendications**

1. Procédé de gestion de la puissance consommée dans des installations électriques (10, 20, 30, 40, 40') qui comporte une étape consistant à déterminer (52) si au moins une charge commandable (3') et au moins une source commandable (7, 9) de l'installation électrique (10, 20, 30, 40, 40') sont connectées à l'installation électrique (10, 20, 30, 40, 40') ou déconnectés de celle-ci, en définissant l'état connecté et l'état déconnecté de la charge commandable (3') et de la source commandable (7, 9) lorsque la charge commandable (3') et la source commandable (7, 9) sont respectivement connectées à l'installation électrique (10, 20, 30, 40, 40') ou déconnées de celles-ci, un nombre de charges, sélectionnées parmi des charges commandables (3') et des charges non commandables (2') étant connectées à l'installation électrique (10, 20, 30, 40, 40'), et un nombre de sources sélectionnées parmi des sources commandables (7, 9) et des sources non commandables étant connectées à l'installation électrique (10, 20, 30, 40, 40'), procédé **caractérisé en ce qu'** il comporte en outre des étapes consistant à :

   déterminer une valeur de référence de puissance maximum (51) pour limiter la puissance totale échangée entre l'installation électrique (10, 20, 30, 40, 40') et une conduite électrique (1) en établissant une marge de sécurité de la valeur de référence de puissance maximum, déterminer une valeur de référence de courant initial maximum (53) pour chacune des charges commandables (3') et des sources commandables (7, 9) sur le fondement :

      de la valeur de référence de puissance maximum (51), et du nombre de charges et du nombre de sources connectées à l'installation électrique (10, 20, 30, 40, 40'), pour chacune des charges commandables connectées (3'), mesurer la consommation instantanée et régler (57), sur le fondement de la consommation instantanée mesurée des charges commandables (3'), une valeur de référence de courant disponible maximum (54), si la valeur de référence de courant disponible maximum (54) réglée lors de l'étape précédente est inférieure à la valeur minimum du courant nécessaire à une charge commandable connectée à l'installation électrique (10, 20, 30, 40, 40'), déconnecter cette charge commandable de l'installation électrique (10, 20, 30, 40, 40') et mettre à jour le nombre de charges connectées à l'installation électrique (10, 20, 30, 40, 40') en conséquence, pour chacune des sources commandables connectées (7, 9), mesurer la puissance générée et régler la valeur de référence de courant disponible maximum, calculer la consommation totale de l'installation électrique (10, 20, 30, 40, 40') en utilisant :

         la valeur de référence de courant disponible maximum (54) pour chacune des charges commandables connectées à partir du nombre mis à jour de charges connectées à l'installation électrique (10, 20, 30, 40, 40'), et la valeur de référence de courant disponible maximum pour chacune des sources commandables connectées à partir du nombre mis à jour de sources connectées à l'installation électrique (10, 20, 30, 40, 40'), déterminer une valeur de référence de puissance maximum mise à jour chaque fois qu'au moins l'une des charges commandables (3') ou au moins l'une des sources commandables (7, 9) modifie son état connecté ou déconnecté.

2. Procédé conforme à la revendication 1,
   **caractérisé en ce que**
   l'on détermine (52) si au moins une charge commandable (3') de l'installation électrique (10, 20, 30, 40, 40') est connectée à la conduite électrique (1) ou déconnectée de celle-ci en prenant en considération la durée estimée d'utilisation de cette charge commandable (3').

3. Procédé conforme à l'une quelconque des revendications précédentes,
   **caractérisé en ce que**
   l'on détermine (52) si au moins une charge commandable (3') de l'installation électrique (10, 20, 30, 40, 40') est connectée à la conduite électrique (1) ou déconnectée de celle-ci en prenant en considération un niveau de priorité attribué à cette charge commandable (3').

4. Procédé conforme à l'une quelconque des revendications précédentes,
**caractérisé en ce que**
l'on détermine (52) si au moins une charge commandable (3') de l'installation électrique (10, 20, 30, 40, 40') est reliée à la conduite électrique (1) ou déconnectée de celle-ci en prenant en considération la courbe de déclenchement de la protection magnétothermique de l'installation électrique (10, 20, 30, 40, 40').

5. Procédé conforme à l'une quelconque des revendications précédentes,
**caractérisé en ce que**
l'on détermine (52) si au moins une charge contrôlable (3') de l'installation électrique (10, 20, 30, 40, 40') est connectée à la conduite électrique (1) ou déconnectée de celle-ci en utilisant une information reçue en temps réel relative à l'installation électrique (10, 20, 30, 40, 40') provenant d'un centre de commande externe de l'installation électrique (10, 20, 30, 40, 40').

6. Procédé conforme à l'une quelconque des revendications précédentes,
**caractérisé en ce qu'**
il est mis en œuvre dans une unité de commande centrale (5) appartenant à l'installation électrique (10, 20, 30, 40, 40').

7. Procédé conforme à la revendication 5,
**caractérisé en ce que**
l'unité de commande centrale (5) est située dans l'extrémité de tête de l'installation électrique (10, 20, 30, 40, 40').

8. Procédé conforme à la revendication 5,
**caractérisé en ce que**
l'unité de commande centrale (5) est intégrée à au moins une charge commandable (3').

9. Procédé conforme à la revendication 6,
**caractérisé en ce que**
l'unité de commande centrale (5) est intégrée dans au moins un poste de charge (3) de véhicules électriques (6) constituant des charges commandables (3') de l'installation électrique (10, 20, 30, 40, 40').

10. Procédé conforme à la revendication 9,
**caractérisé en ce que**
dans l'hypothèse d'une perte de fonctionnalité d'au moins l'un des postes de charge (3) de véhicules électriques (6) constituant des charges commandables (3') de l'installation électrique (10, 20, 30, 40, 40'), au moins un poste de charge (3) de véhicules électriques (6) n'ayant pas de perte de fonctionnalité, l'unité de commande centrale (5) est intégrée dans ce poste de charge (3) de véhicules électriques (6) n'ayant pas de perte de fonctionnalité.

11. Procédé conforme à la revendication 1,
**caractérisé en ce que**
si l'installation électrique (10, 20, 30, 40, 40') comporte au moins une source d'énergie renouvelable (7, 11, 12), les valeurs de référence de courant disponible maximum (54) des connexions à la conduite électrique (1) et des déconnexions de celle-ci pour chaque charge commandable (3') sont établies en prenant en considération la production des sources d'énergie renouvelable (7, 11, 12).

12. Procédé conforme à la revendication 4,
**caractérisé en ce que**
la connexion ou la déconnexion des charges est effectuée avec des temps de réponse qui sont réglés en fonction de la courbe de déclenchement de la protection magnétothermique et de mesures effectuées au moyen d'un capteur de températures.

13. Logiciel comprenant des moyens de code de programme qui, lorsqu'ils sont chargés dans un processeur intégré dans un dispositif d'une installation électrique (10, 20, 30, 40, 40') permettent à ces moyens de code de programme de mettre en œuvre le procédé conforme à l'une quelconque des revendications 1 à 12.

**FIG. 1**

**FIG. 2**

FIG. 3

**FIG. 4a**

**FIG. 4b**

**FIG. 5**

**FIG. 6**

**FIG. 7**

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100134067 A1
- WO 2011157974 A
- US 20110133693 A1